# EUROPEAN PATENT APPLICATION

(11) **EP 4 324 881 A1**
(43) Date of publication of application: **21.02.2024**
(21) Application number: 22809307.6
(22) Date of filing: 30.06.2022
(51) Int. Cl.: C08L 77/00, H01F 1/00

(54) **INJECTION MOLDED MAGNETIC MATERIAL AND PREPARATION METHOD THEREFOR**

(71) Applicant: Hengdian Group DMEGC Magnetics Co., Ltd., Dongyang, Zhejiang 322118 (CN)
(72) Inventor: HU, Jiangping, Dongyang, Zhejiang 322118 (CN); LI, Yuping, Dongyang, Zhejiang 322118 (CN); JIN, Zhihong, Dongyang, Zhejiang 322118 (CN)
(74) Representative: Müller Schupfner & Partner Patent- und Rechtsanwaltspartnerschaft mbB
(86) International application number: PCT/CN2022/103101
(87) International publication number: WO 2024/000503

(57) **Abstract**

The present disclosure provides an injection molding magnetic material and a preparation method thereof. The injection molding magnetic material includes: 80 to 85 parts of a magnetic powder; 10 to 15 parts of a polymer binder; 0.5 to 1 part of a first coupling agent; 0.5 to 1 part of a second coupling agent; 2 to 5 parts of wollastonite; and 0.1 to 1 part of an auxiliary agent, in terms of part by weight. The injection molding magnetic material of the application can effectively improve the interface bonding effect between components by filling wollastonite on the surface of the injection molding magnetic material. At the same time, the use of an auxiliary agent and wollastonite can ensure the formability and wear resistance of the injection molding magnetic material. The first coupling agent can improve the compatibility between the magnetic powder and the binder, and the second coupling agent can improve the adhesion of the wollastonite, and improve the bonding force between the wollastonite and the magnetic powder, thereby improving the wear resistance of the injection molding magnetic material. In the above proportioning range, each component can interact synergistically to improve the interface bonding effect therebetween, so as to further improve the wear resistance of the injection molding magnetic material.

## Description

### Technical Field

The present disclosure relates to the technical field of injection molding magnetic materials, in particular to an injection molding magnetic material and a preparation method thereof.

### Background

Injection molded magnetic products are widely used in the application areas of automobiles, household appliances, electric tools, and the like due to their advantages of high dimensional accuracy, good processability, and ease of large-scale production, etc. In recent years, with the vigorous development of turbocharging vehicles and the growing popularity of new energy vehicles, micro electronic water pumps used as turbochargers and battery pack liquid cooling systems have developed rapidly. At present, the micro electronic water pump mainly adopts permanent magnet DC motor, in which the motor rotor adopts injection molding magnets with high dimensional accuracy, large mechanical strength, long working life and high temperature resistance (above 180° C). During the working process of water pump rotors, it is needed to run around the central shaft at a high speed. Under the high-speed friction of the injection molded magnets, the inner circle of the rotor is prone to abrasion, and the worn rotor is prone to dynamic balance problems, which eventually lead to problems such as motor vibration and abnormal noise, etc.

At present, the commonly used solution is to embed wear-resistant materials in the middle of the rotor magnet, such as composite graphite inserts, PPS+30% GF inserts, etc., to improve the wear resistance of the rotor. However, this solution requires secondary injection molding. At the same time, the insert materials are generally expensive, especially graphite inserts, which greatly increases the manufacturing cost of the pump rotor. At the same time, because of the inconsistency in dimensional shrinking rate between the insert and the injection molding magnet, it is easy to cause the magnet to crack after cold and hot shock.

### Summary

The disclosure mainly aims to provide an injection molding magnetic material and a preparation method thereof to solve the problems of low wear resistance and easy cracking of the injection molding material in the prior art.

In order to achieve the above object, according to one aspect of the disclosure, an injection molding magnetic material is provided, in terms of part by weight, the injection molding magnetic material comprises:

| | |
|---|---|
| a magnetic powder | 80 to 85 parts; |
| a polymer binder | 10 to 15 parts; |
| a first coupling agent | 0.5 to 1 part; |
| a second coupling agent | 0.5 to 1 part; |
| wollastonite | 2 to 5 parts; and |
| an auxiliary agent | 0.1 to 1 part. |

Further, the magnetic powder is ferrite magnetic powder and/or rare earth injection molding magnetic powder, preferably the ferrite magnetic powder is Sr ferrite and/or Ba ferrite magnetic powder, more preferably the ferrite magnetic powder is Sr ferrite, and preferably the magnetic powder has an average particle size D₅₀ of 1.8 to 2.0 µm.

Further, the polymer binder is polyphenylene sulfide; preferably the polyphenylene sulfide has a melt flow rate of 500 to 3000g/10min.

Further, the auxiliary agent is a composition of a fluorine additive and a slipping agent, preferably the fluorine additive is polyphthalamide, and preferably the slipping agent is erucamide; further preferably the parts by weight ratio of the fluorine additive and the slipping agent is 2:3 to 3:2.

Further, the wollastonite is superfine wollastonite, more preferably the wollastonite has a particle size of 800 to 1200 mesh.

Further, the first coupling agent is a silane coupling agent, preferably the silane coupling agent is KH550 and/or KH560; and preferably, the second coupling agent is a phosphate coupling agent.

Further, in terms of part by weight, the injection molding magnetic material comprises:

| | |
|---|---|
| a magnetic powder | 83 to 85 parts; |
| a polymer binder | 12 to 15 parts; |
| a first coupling agent | 0.5 to 1 part; |
| a second coupling agent | 0.5 to 1 part; |
| wollastonite | 2 to 5 parts; and |
| an auxiliary agent | 0.1 to 1 part; |

more preferably, in terms of part by weight, the injection molding magnetic material comprises:

| | |
|---|---|
| a magnetic powder | 83 parts; |
| a polymer binder | 12 parts; |
| a first coupling agent | 0.5 parts; |
| a second coupling agent | 0.5 parts; |
| wollastonite | 3 parts; and |
| an auxiliary agent | 1 part. |

In order to achieve the above object, according to one aspect of the disclosure, a preparation method of the injection molding magnetic material is provided. The preparation method includes: step S1, subjecting the magnetic powder, the first coupling agent and the polymer binder to a first mixing, so as to obtain a first mixture; step S2, subjecting the first mixture to a first extrusion granulation to obtain an injection molding magnetic masterbatch; step S3, subjecting the injection molding magnetic masterbatch, the second coupling agent, wollastonite, the auxiliary agent to a second mixing, so as to obtain a second mixture; and step S4, subjecting the second mixture to a second extrusion granulation to obtain the injection molding magnetic material.

Further, the temperatures of the first mixing and the second mixing are independently 80 to 120° C, and the times of the first mixing and the second mixing are independently 30 to 60 min.

Further, the first extrusion granulation and the second extrusion granulation both use a twin-screw extruder, and preferably the temperatures of the first extrusion granulation and the second extrusion granulation are independently 290 to 310° C.

Further, in the step S3, the first coupling agent and the second coupling agent are mixed with an organic solvent before use, preferably the organic solvent is isopropanol, and preferably the second coupling agent is mixed with the organic solvent in a weight ratio of 1:5 to 1:10.

Applying the technical solution of the disclosure, the injection molding magnetic material of the application can effectively improve the interface bonding effect between components by filling wollastonite on the surface of the injection molding magnetic material. At the same time, the use of an auxiliary agent and wollastonite can ensure the formability and wear resistance of the injection molding magnetic material. The first coupling agent can improve the compatibility between the magnetic powder and the binder, and the second coupling agent can improve the adhesion of the wollastonite, and improve the bonding force between the wollastonite and the magnetic powder, thereby improving the wear resistance of the injection molding magnetic material. In the above proportioning range, each component can interact synergistically to improve the interface bonding effect therebetween, so as to further improve the wear resistance of the injection molding magnetic material.

### Brief Description of the Drawings

The accompanying drawings of the description, which form a part of the present application, are used to provide a further understanding of the disclosure. The illustrative examples and their descriptions of the disclosure are used to explain the disclosure, and do not constitute an improper limitation to the disclosure. In the accompanying drawings:
Figure 1 shows a magnetic device used in one specific embodiment of the disclosure;
Figure 2 shows a magnetic device used in the comparative example 4 of the disclosure.

### Detailed Description of the Embodiments

It should be noted that the embodiments and features in the embodiments in the application can be combined with each other without conflict. The disclosure will be described in detail below with reference to the drawings and in combination with embodiments.

As analyzed in the background technology, the injection molding materials in the prior art have the problems of low wear resistance and easy cracking. To solve the problems, the application provides an injection molding magnetic material and a preparation method thereof.

In a typical embodiment of the application, an injection molding magnetic material is provided, in terms of part by weight, the injection molding magnetic material comprises:

| | |
|---|---|
| a magnetic powder | 80 to 85 parts; |
| a polymer binder | 10 to 15 parts; |
| a first coupling agent | 0.5 to 1 part; |
| a second coupling agent | 0.5 to 1 part; |
| wollastonite | 2 to 5 parts; and |
| an auxiliary agent | 0.1 to 1 part. |

The injection molding magnetic material of the application can effectively improve the interface bonding effect between components by filling wollastonite on the surface of the injection molding magnetic material. At the same time, the use of an auxiliary agent and wollastonite can ensure the formability and wear resistance of the injection molding magnetic material. The first coupling agent can improve the compatibility between the magnetic powder and the binder, and the second coupling agent can improve the adhesion of the wollastonite, and improve the bonding force between the wollastonite and the magnetic powder, thereby improving the wear resistance of the injection molding magnetic material. In the above proportioning range, each component can interact synergistically to improve the interface bonding effect therebetween, so as to further improve the wear resistance of the injection molding magnetic material.

Among the above components, the higher the content of a polymer binder and the wollastonite, the lower the viscosity and the worse the fluidity of the injection molding magnetic material, which leads to the decline of the performance of the injection molding magnetic material.

In the prior art, the inconsistent dimensional shrinkage mainly occurs between different materials, such as the injection molding of magnets outside the graphite insert, different degrees of shrinkage between the graphite insert and the magnets will occur. Through fully mixing and milling various components, the present application improves the wear resistance of the injection molding magnetic material, and solves the problem of inconsistent dimensional shrinkage when it is used to prepare the water pump rotor.

The injection molding magnetic material of the application can be integrally molded into a water pump rotor with high wear resistance, without requiring the use of wear-resistant inlay secondary injection molding, which can greatly save the manufacturing costs of secondary injection molding and the use of inserts, and at the same time reduce the risk of product cracking due to the inconsistent dimensional shrinking rate between the insert and the injection molding magnet.

The present application has no special restrictions on the types of the magnetic powder, and the commonly used magnetic powder in the art can be applied to the present application. In some embodiments, the magnetic powder is ferrite magnetic powder or rare earth injection molding magnetic powder, preferably the ferrite magnetic powder is Sr ferrite and/or Ba ferrite magnetic powder, more preferably the ferrite magnetic powder is Sr ferrite. If the average particle size of the magnetic powder is too large, the fluidity of the injection molding magnetic material will be reduced. In order to balance the fluidity and the mechanical strength of the injection molding magnetic material, the magnetic powder preferably has an average particle size D₅₀ of 1.8 to 2.0 µm.

The specific type of a polymer binder is selected according to the requirements of the injection molding magnetic devices. Considering the cost and in order to maintain the fluidity of the injection molding magnetic material, in some embodiments, the polymer binder is polyphenylene sulfide; preferably the polyphenylene sulfide has a melt flow rate of 500 to 3000g/10min, more preferably 1100 to 2500g/10min. The melt flow rate is measured at 316 ° C and 5Kg according to ISO1133.

In order to ensure the formability and wear resistance of the injection molding magnetic material, in some embodiments, the auxiliary agent is a composition of a fluorine additive and a slipping agent, preferably the fluorine additive is polyphthalamide (PPA), preferably the fluorine additive model is DA310ST, and preferably the slipping agent is erucamide; further preferably the parts by weight ratio of the fluorine additive and the slipping agent is 2:3 to 3:2.

In some embodiments, the wollastonite is superfine wollastonite, more preferably the wollastonite has a particle size of 800 to 1200 mesh. The particle size of wollastonite within this range can effectively improve the wear resistance of the injection molding magnetic materials. If the particle size of wollastonite is too high, it will cause too fine powder, which will require more binders, thus reducing the fluidity of the injection molding magnetic materials, and affecting the wear resistance of the injection molding magnetic materials. If the particle size is too low, it will cause the falling off of the powder.

Coupling agent can make the magnetic powder have good dispersion in the system, so that the injection molding magnetic materials have good compatibility, and the binding force of each component can be improved. In order to obtain better effect of coupling treatment, in some embodiments, the first coupling agent is a silane coupling agent, preferably the silane coupling agent is KH550 and/or KH560; and preferably, the second coupling agent is a phosphate coupling agent.

In order to further improve the synergistic effect between components, and thus improve the wear resistance of the injection molding magnetic materials, in some embodiments, in terms of part by weight, the injection molding magnetic material comprises:

| | |
|---|---|
| a magnetic powder | 83 to 85 parts; |
| a polymer binder | 12 to 15 parts; |
| a first coupling agent | 0.5 to 1 part; |
| a second coupling agent | 0.5 to 1 part; |
| wollastonite | 2 to 5 parts; and |
| an auxiliary agent | 0.1 to 1 part; |

more preferably, in terms of part by weight, the injection molding magnetic material comprises:

| | |
|---|---|
| a magnetic powder | 83 parts; |
| a polymer binder | 12 parts; |
| a first coupling agent | 0.5 parts; |
| a second coupling agent | 0.5 parts; |
| wollastonite | 3 parts; and |
| an auxiliary agent | 1 part. |

In another typical embodiment of the application, a preparation method of the injection molding magnetic material is provided. The preparation method includes: step S1, subjecting the magnetic powder, the first coupling agent and the binder to a first mixing, so as to obtain a first mixture; step S2, subjecting the first mixture to a first extrusion granulation to obtain an injection molding magnetic masterbatch; step S3, subjecting the injection molding magnetic masterbatch, the second coupling agent, wollastonite, the auxiliary agent to a second mixing, so as to obtain a second mixture; and step S4, subjecting the second mixture to a second extrusion granulation to obtain the injection molding magnetic material.

In the present application, raw materials are weighed according to the above proportions of components, and the compatibility between the magnetic powder and the binder can be improved through the first coupling treatment, the adhesion of wollastonite and the adhesion between wollastonite and a magnetic powder can be improved through the second coupling treatment, thus improving the wear resistance of the injection molding magnetic materials. The injection molding magnetic material prepared by the preparation method of the application has good wear resistance and is not easy to crack.

In some embodiments, in order to carry out the coupling treatment of a magnetic powder, the step S1 includes: subjecting the magnetic powder and the first coupling agent to a third mixing, so as to obtain the third mixture; and subjecting the third mixture and the binder to the first mixing, so as to obtain the first mixture.

In some embodiments, in order to carry out the coupling treatment of the injection molding magnetic masterbatch, the step S3 includes: subjecting the injection molding magnetic masterbatch and the second coupling agent to a fourth mixing, so as to obtain the fourth mixture; and subjecting the fourth mixture, wollastonite, and the auxiliary agent to the second mixing, so as to obtain the second mixture.

The temperatures of the above third mixing and the fourth mixing are independently 80 to 120° C, and the times of the first mixing and the second mixing are independently 30 to 60 min.

The present application has no special restrictions on the mixing conditions, in some embodiments, the temperatures of the first mixing and the second mixing are independently 80 to 120° C, and the times of the first mixing and the second mixing are independently 30 to 60 min.

Common extrusion and granulation conditions in the art can be applied to this application, in some embodiments, both the first extrusion granulation and the second extrusion granulation use a twin-screw extruder, and preferably the temperatures of the first extrusion granulation and the second extrusion granulation are independently 290 to 310° C.

In order to make the injection molding magnetic masterbatch and the second coupling agent mix more evenly, in some embodiments, in the step S3, the first coupling agent and the second coupling agent are mixed with an organic solvent before use, preferably the organic solvent is isopropanol, and preferably the second coupling agent is mixed with the organic solvent in a weight ratio of 1:5 to 1:10.

In some embodiments, both the first mixing and the second mixing can use a high-speed mixer for high-speed mixing, and the speeds of the first mixing and the second mixing are independently 600 to 1,000 rpm.

The present application will be further described in detail below in combination with specific examples, which cannot be understood as limiting the scope of protection claimed in the present application.

In the present disclosure, unless otherwise specified, all equipment and raw materials are commerciall available or are commonly used in the industry. The methods in the following examples are conventional methods in the art, unless otherwise specified.

The permanent magnetic Sr ferrite magnetic powder has an average particle size (Fisher gas permeation method) D₅₀ of 1.8 to 2.0 µm;
Polyphenylene sulfide I: melt index (316°C, Kg) of 500 g/10min;
Polyphenylene sulfide II: melt index (316°C, Kg) of 1100 g/10min;
Polyphenylene sulfide III: melt index (316°C, Kg) of 2500 g/10min;
Wollastonite A: particle size 500 mesh;
Wollastonite B: particle size 800 mesh;
Wollastonite C: particle size 1200 mesh;
Wollastonite D: particle size 1500 mesh;
Auxiliary agent A: 0.5 parts of fluorine additive PPA, 0.5 parts of erucamide;
Auxiliary agent B: 0.6 parts of fluorine additive PPA, 0.4 parts of erucamide;
Auxiliary agent C: 0.4 parts of fluorine additive PPA, 0.6 parts of erucamide;
Auxiliary agent D: 0.05 parts of fluorine additive PPA, 0.05 parts of erucamide.

Test method:
The dumbbell shaped strength strips and short strips were molded at a temperature of 330° C, and then the tensile strength and bending strength of the materials were tested using the Instron Universal 6633 testing machine.

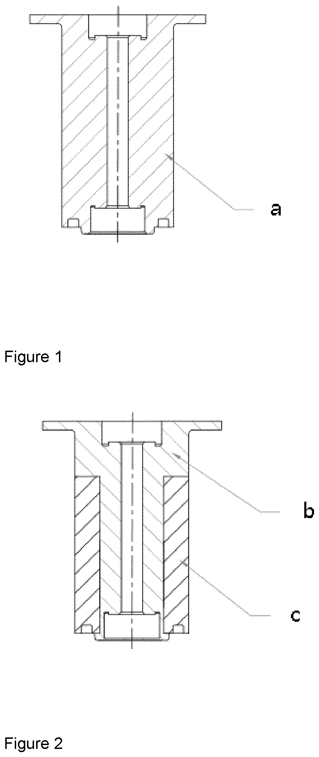

The injection molding magnetic materials of the following examples were injection molded into the magnetic devices as shown in Figure 1, and the injection molding magnetic materials of the comparative example 4 were injection molded into the magnetic devices as shown in Figure 2. The magnetic devices were installed into the water pump motor, run at a high speed, the speed reached 1,000 revolutions per minute (rpm), and the time was 300 h, and the change rate of the inner hole size before and after the operation was tested.

According to ISO 1133, the fluidity of each group of examples and comparative examples at 330° C and 10Kg pressure was tested.

### Example 1

(1) 83 parts of Sr ferrite magnetic powder (D₅₀ = 1.8 µm), and 0.5 parts of KH550 coupling agent (mixing with isopropanol in a weight ratio of 1:6) were blended at a high speed of 800 rpm at 100° C for 40 min to obtain the fourth mixture;
(2) 12 parts of polyphenylene sulfide with a melt index (316 ° C, Kg) of 500g/10min was added to the fourth mixture, and continuously blended at 800 rpm for 30min to obtain the first mixture;
(3) The first mixture was extruded and granulated in a twin-screw extruder at a granulation temperature of 300° C to obtain an injection molding magnetic masterbatch;
(4) 0.5 parts of phosphate coupling agent (mixing with isopropanol in a weight ratio of 1:6) were mixed with the above injection molding magnetic masterbatch particles at a high speed of 800 rpm at 100° C for 40 min to obtain the third mixture;
(5) 3 parts of 500 mesh ultra-fine wollastonite was mixed with the third mixture, and at the same time 1 part of combined auxiliary agent including 0.5 parts of fluoride additive PPA and 0.5 parts of erucamide was added, which was continuously mixed at a high speed of 800 rpm for 20 min to obtain the second mixture;
(6) The second mixture was added into the twin-screw extruder for granulation, and the granulation temperature was 310° C to obtain the injection molding magnetic material; and
(7) The above injection molding magnetic material particles were injection molded at 335° C to form the magnetic device as shown in Figure 1, where a is a magnet.

### Example 2

The difference from example 1 lies in that in the step (5), 3 parts of 800 mesh ultra-fine wollastonite was mixed into the third mixture.

### Example 3

The difference from example 1 lies in that in the step (5), 3 parts of 1200 mesh ultra-fine wollastonite was mixed into the third mixture.

### Example 4

The difference from example 1 lies in that in the step (5), 3 parts of 1500 mesh ultra-fine wollastonite was mixed into the third mixture.

### Example 5

The difference from example 2 lies in that in the step (5), the combined auxiliary agent was 0.6 parts of fluoride additive PPA and 0.4 parts of erucamide.

### Example 6

The difference from example 2 lies in that in the step (5), the combined auxiliary agent was 0.4 parts of fluoride additive PPA and 0.6 parts of erucamide.

### Example 7

(1) 83 parts of Sr ferrite magnetic powder (D₅₀ = 1.8 µm), and 0.5 parts of KH550 coupling agent (mixing with isopropanol in a weight ratio of 1:6) were blended at a high speed at 100° C for 40 min to obtain the fourth mixture;
(2) 12 parts of polyphenylene sulfide with a melt index (316 ° C, Kg) of 1100g/10min was added to the fourth mixture, and continuously blended for 30min to obtain the first mixture;
(3) The first mixture was extruded and granulated in a twin-screw extruder at a granulation temperature of 300° C to obtain an injection molding magnetic masterbatch;
(4) 0.5 parts of phosphate coupling agent (mixing with isopropanol in a weight ratio of 1:6) were mixed with the above injection molding magnetic masterbatch particles at a high speed at 100° C for 40 min to obtain the third mixture;
(5) 3 parts of 1200 mesh ultra-fine wollastonite was mixed with the third mixture, and at the same time 1 part of combined auxiliary agent including 0.6 parts of fluoride additive PPA and 0.4 parts of erucamide was added, which was continuously mixed at a high speed for 20 min to obtain the second mixture;
(6) The second mixture was added into the twin-screw extruder for granulation, and the granulation temperature was 310° C to obtain the injection molding magnetic material; and
(7) The above injection molding magnetic material particles were injection molded at 335° C to form the magnetic device as shown in Figure 1.

### Example 8

(1) 85 parts of Sr ferrite magnetic powder (D₅₀ = 1.8 µm), and 0.5 parts of KH550 coupling agent (mixing with isopropanol in a weight ratio of 1:6) were blended at a high speed at 100° C for 40 min to obtain the fourth mixture;
(2) 12 parts of polyphenylene sulfide with a melt index (316 ° C, Kg) of 1100g/10min was added to the fourth mixture, and continuously blended for 30min to obtain the first mixture;
(3) The first mixture was extruded and granulated in a twin-screw extruder at a granulation temperature of 300° C to obtain an injection molding magnetic masterbatch;
(4) 0.5 parts of phosphate coupling agent (mixing with isopropanol in a weight ratio of 1:6) were mixed with the above injection molding magnetic masterbatch particles at a high speed at 100° C for 40 min to obtain the third mixture;
(5) 1 part of 1200 mesh ultra-fine wollastonite was mixed with the third mixture, and at the same time 1 part of combined auxiliary agent including 0.6 parts of fluoride additive PPA and 0.4 parts of erucamide was added, which was continuously mixed at a high speed for 20 min to obtain the second mixture;
(6) The second mixture was added into the twin-screw extruder for granulation, and the granulation temperature was 310° C to obtain the injection molding magnetic material; and
(7) The above injection molding magnetic material particles were injection molded at 335° C to form the magnetic device as shown in Figure 1.

### Example 9

(1) 81 parts of Sr ferrite magnetic powder (D₅₀ = 1.8 µm), and 0.5 parts of KH550 coupling agent (mixing with isopropanol in a weight ratio of 1:6) were blended at a high speed at 100° C for 40 min to obtain the fourth mixture;
(2) 12 parts of polyphenylene sulfide with a melt index (316 ° C, Kg) of 1100g/10min was added to the fourth mixture, and continuously blended for 30min to obtain the first mixture;
(3) The first mixture was extruded and granulated in a twin-screw extruder at a granulation temperature of 300° C to obtain an injection molding magnetic masterbatch;
(4) 0.5 parts of phosphate coupling agent (mixing with isopropanol in a weight ratio of 1:6) were mixed with the above injection molding magnetic masterbatch particles at a high speed at 100° C for 40 min to obtain the third mixture;
(5) 5 parts of 1200 mesh ultra-fine wollastonite was mixed with the third mixture, and at the same time 1 part of combined auxiliary agent including 0.6 parts of fluoride additive PPA and 0.4 parts of erucamide was added, which was continuously mixed at a high speed for 20 min to obtain the second mixture;
(6) The second mixture was added into the twin-screw extruder for granulation, and the granulation temperature was 310° C to obtain the injection molding magnetic material; and
(7) The above injection molding magnetic material particles were injection molded at 335° C to form the magnetic device as shown in Figure 1.

### Example 10

(1) 81 parts of Sr ferrite magnetic powder (D₅₀ = 1.8 µm), and 0.5 parts of KH550 coupling agent (mixing with isopropanol in a weight ratio of 1:6) were blended at a high speed at 100° C for 40 min to obtain the fourth mixture;
(2) 14 parts of polyphenylene sulfide with a melt index (316 ° C, Kg) of 1100g/10min was added to the fourth mixture, and continuously blended for 30min to obtain the first mixture;
(3) The first mixture was extruded and granulated in a twin-screw extruder at a granulation temperature of 300° C to obtain an injection molding magnetic masterbatch;
(4) 0.5 parts of phosphate coupling agent (mixing with isopropanol in a weight ratio of 1:6) were mixed with the above injection molding magnetic masterbatch particles at a high speed at 100° C for 40 min to obtain the third mixture;
(5) 3 parts of 1200 mesh ultra-fine wollastonite was mixed with the third mixture, and at the same time 1 part of combined auxiliary agent including 0.6 parts of fluoride additive PPA and 0.4 parts of erucamide was added, which was continuously mixed at a high speed for 20 min to obtain the second mixture;
(6) The second mixture was added into the twin-screw extruder for granulation, and the granulation temperature was 310° C to obtain the injection molding magnetic material; and
(7) The above injection molding magnetic material particles were injection molded at 335° C to form the magnetic device as shown in Figure 1.

### Example 11

(1) 85 parts of Sr ferrite magnetic powder (D₅₀ = 1.8 µm), and 0.5 parts of KH550 coupling agent (mixing with isopropanol in a weight ratio of 1:6) were blended at a high speed at 100° C for 40 min to obtain the fourth mixture;
(2) 10 parts of polyphenylene sulfide with a melt index (316 ° C, Kg) of 1100g/10min was added to the fourth mixture, and continuously blended for 30min to obtain the first mixture;
(3) The first mixture was extruded and granulated in a twin-screw extruder at a granulation temperature of 300° C to obtain an injection molding magnetic masterbatch;
(4) 0.5 parts of phosphate coupling agent (mixing with isopropanol in a weight ratio of 1:6) were mixed with the above injection molding magnetic masterbatch particles at a high speed at 100° C for 40 min to obtain the third mixture;
(5) 3 parts of 1200 mesh ultra-fine wollastonite was mixed with the third mixture, and at the same time 1 part of combined auxiliary agent including 0.6 parts of fluoride additive PPA and 0.4 parts of erucamide was added, which was continuously mixed at a high speed for 20 min to obtain the second mixture;
(6) The second mixture was added into the twin-screw extruder for granulation, and the granulation temperature was 310° C to obtain the injection molding magnetic material; and
(7) The above injection molding magnetic material particles were injection molded at 335° C to form the magnetic device as shown in Figure 1.

### Example 12

(1) 83 parts of Sr ferrite magnetic powder (D₅₀ = 1.8 µm), and 0.5 parts of KH550 coupling agent (mixing with isopropanol in a weight ratio of 1:6) were blended at a high speed at 100° C for 40 min to obtain the fourth mixture;
(2) 12 parts of polyphenylene sulfide with a melt index (316 ° C, Kg) of 2500g/10min was added to the fourth mixture, and continuously blended for 30min to obtain the first mixture;
(3) The first mixture was extruded and granulated in a twin-screw extruder at a granulation temperature of 300° C to obtain an injection molding magnetic masterbatch;
(4) 0.5 parts of phosphate coupling agent (mixing with isopropanol in a weight ratio of 1:6) were mixed with the above injection molding magnetic masterbatch particles at a high speed at 100° C for 40 min to obtain the third mixture;
(5) 3 parts of 1200 mesh ultra-fine wollastonite was mixed with the third mixture, and at the same time 1 part of combined auxiliary agent including 0.6 parts of fluoride additive PPA and 0.4 parts of erucamide was added, which was continuously mixed at a high speed for 20 min to obtain the second mixture;
(6) The second mixture was added into the twin-screw extruder for granulation, and the granulation temperature was 310° C to obtain the injection molding magnetic material; and
(7) The above injection molding magnetic material particles were injection molded at 335° C to form the magnetic device as shown in Figure 1.

### Example 13

(1) 80 parts of Ba ferrite magnetic powder (D₅₀ = 2.0 µm), and 1 part of KH560 coupling agent (mixing with isopropanol in a weight ratio of 1:10) were blended at a high speed of 600 rpm at 120° C for 30min to obtain the fourth mixture;
(2) 10 parts of polyphenylene sulfide with a melt index (316 ° C, Kg) of 500g/10min was added to the fourth mixture, and continuously blended for 30min to obtain the first mixture;
(3) The first mixture was extruded and granulated in a twin-screw extruder at a granulation temperature of 290° C to obtain an injection molding magnetic masterbatch;
(4) 1 part of phosphate coupling agent (mixing with isopropanol in a weight ratio of 1:6) were mixed with the above injection molding magnetic masterbatch particles at a high speed of 800 rpm at 100° C for 40 min to obtain the third mixture;
(5) 2 parts of 1200 mesh ultra-fine wollastonite was mixed with the third mixture, and at the same time 0.1 parts of combined auxiliary agent including 0.05 parts of fluoride additive PPA and 0.05 parts of erucamide was added, which was continuously mixed at a high speed for 20 min to obtain the second mixture;
(6) The second mixture was added into the twin-screw extruder for granulation, and the granulation temperature was 290° C to obtain the injection molding magnetic material; and
(7) The above injection molding magnetic material particles were injection molded at 335° C to form the magnetic device as shown in Figure 1.

### Example 14

(1) 83 parts of Sr ferrite magnetic powder (D₅₀ = 1.8 µm), and 0.5 parts of KH550 coupling agent (mixing with isopropanol in a weight ratio of 1:6) were blended at a high speed of 1000 rpm at 80° C for 60min to obtain the fourth mixture;
(2) 15 parts of polyphenylene sulfide with a melt index (316 ° C, Kg) of 500g/10min was added to the fourth mixture, and continuously blended for 60min to obtain the first mixture;
(3) The first mixture was extruded and granulated in a twin-screw extruder at a granulation temperature of 310° C to obtain an injection molding magnetic masterbatch;
(4) 0.5 parts of phosphate coupling agent (mixing with isopropanol in a weight ratio of 1:6) were mixed with the above injection molding magnetic masterbatch particles at a high speed at 80° C for 60min to obtain the third mixture;
(5) 3 parts of 1200 mesh ultra-fine wollastonite was mixed with the third mixture, and at the same time 1 part of combined auxiliary agent including 0.5 parts of fluoride additive PPA and 0.5 parts of erucamide was added, which was continuously mixed at a high speed of 1000 rpm for 20 min to obtain the second mixture;
(6) The second mixture was added into the twin-screw extruder for granulation, and the granulation temperature was 310° C to obtain the injection molding magnetic material; and
(7) The above injection molding magnetic material particles were injection molded at 335° C to form the magnetic device as shown in Figure 1.

### Comparative Example 1

(1) 87 parts of Sr ferrite magnetic powder (D₅₀ = 1.8 µm), and 1 part of KH550 coupling agent (mixing with isopropanol in a weight ratio of 1:6) were blended at a high speed at 100° C for 40 min to obtain a mixture;
(2) 12 parts of polyphenylene sulfide with a melt index (316 ° C, Kg) of 500 g/10min was added to the mixture, and continuously blended for 30min to obtain a polymer mixture;
(3) The above polymer mixture was extruded and granulated in a twin-screw extruder at a granulation temperature of 300° C to obtain an injection molding magnetic material;
(4) The above injection molding magnetic material was injection molded at 335° C to form the magnetic device as shown in Figure 1.

### Comparative Example 2

(1) 87 parts of Sr ferrite magnetic powder (D₅₀ = 1.8 µm), and 1 part of KH550 coupling agent (mixing with isopropanol in a weight ratio of 1:6) were blended at a high speed at 100° C for 40 min to obtain a mixture;
(2) 12 parts of polyphenylene sulfide with a melt index (316 ° C, Kg) of 1100 g/10min was added to the mixture, and continuously blended for 30min to obtain a polymer mixture;
(3) The above polymer mixture was extruded and granulated in a twin-screw extruder at a granulation temperature of 300° C to obtain an injection molding magnetic material;
(4) The above injection molding magnetic material was injection molded at 335°C to form the magnetic device as shown in Figure 1.

### Comparative Example 3

(1) 87 parts of Sr ferrite magnetic powder (D₅₀ = 1.8 µm), and 1 part of KH550 coupling agent (mixing with isopropanol in a weight ratio of 1:6) were blended at a high speed at 100°C for 40 min to obtain a mixture;
(2) 12 parts of polyphenylene sulfide with a melt index (316 °C, Kg) of 2500 g/10min was added to the mixture, and continuously blended for 30min to obtain a polymer mixture;
(3) The above polymer mixture was extruded and granulated in a twin-screw extruder at a granulation temperature of 300°C to obtain an injection molding magnetic material;
(4) The above injection molding magnetic material was injection molded at 335°C to form the magnetic device as shown in Figure 1.

### Comparative Example 4

The insert was injection molded with the Japanese Toray A673 (PPS+30% GF) material, and then the magnet was secondary injection molded with the material produced in comparative example 1, and finally into the device as shown in Figure 2, where b was the insert and c was the magnet.

### Comparative Example 5

(1) 83 parts of Sr ferrite magnetic powder (D₅₀ = 1.8 µm), and 0.5 parts of KH550 coupling agent (mixing with isopropanol in a weight ratio of 1:6) were blended at a high speed at 100°C for 40 min to obtain the fourth mixture;
(2) 12 parts of polyphenylene sulfide with a melt index (316 °C, Kg) of 500g/10min was added to the fourth mixture, and continuously blended for 30min to obtain the first mixture;
(3) The first mixture was extruded and granulated in a twin-screw extruder at a granulation temperature of 300°C to obtain an injection molding magnetic masterbatch;
(4) 0.5 parts of phosphate coupling agent (mixing with isopropanol in a weight ratio of 1:6) were mixed with the above injection molding magnetic masterbatch particles at a high speed at 100°C for 40 min to obtain the third mixture;
(5) 1 part of combined auxiliary agent including 0.5 parts of fluoride additive PPA and 0.5 parts of erucamide was added into the third mixture, which was continuously mixed at a high speed for 20 min to obtain the second mixture;
(6) The second mixture was added into the twin-screw extruder for granulation, and the granulation temperature was 310°C to obtain the injection molding magnetic material; and
(7) The above injection molding magnetic material particles were injection molded at 335°C to form the magnetic device as shown in Figure 1.

### Comparative Example 6

(1) 83 parts of Sr ferrite magnetic powder (D₅₀ = 1.8 µm), and 0.5 parts of KH550 coupling agent (mixing with isopropanol in a weight ratio of 1:6) were blended at a high speed at 100°C for 40 min to obtain the fourth mixture;
(2) 12 parts of polyphenylene sulfide with a melt index (316 °C, Kg) of 500g/10min was added to the fourth mixture, and continuously blended for 30min to obtain the first mixture;
(3) The first mixture was extruded and granulated in a twin-screw extruder at a granulation temperature of 300°C to obtain an injection molding magnetic masterbatch;
(4) 0.5 parts of phosphate coupling agent (mixing with isopropanol in a weight ratio of 1:6) were mixed with the above injection molding magnetic masterbatch particles at a high speed at 100°C for 40 min to obtain the third mixture;
(5) 7 parts of 500 mesh ultra-fine wollastonite was mixed with the third mixture, and at the same time 1 part of combined auxiliary agent including 0.5 parts of fluoride additive PPA and 0.5 parts of erucamide was added, which was continuously mixed at a high speed for 20 min to obtain the second mixture;
(6) The second mixture was added into the twin-screw extruder for granulation, and the granulation temperature was 310°C to obtain the injection molding magnetic material; and
(7) The above injection molding magnetic material particles were injection molded at 335°C to form the magnetic device as shown in Figure 1.

The components and proportions of the above examples and comparative examples are shown in Table 1, and the test results of the above examples and comparative examples are shown in Table 2.

**Table 1**

| | | | | | | | Primary granulation | | | Secondary granulation | | |
|---|---|---|---|---|---|---|---|---|---|---|---|---|
| | | | | | | | Magnetic powder | First coupling agent | Polyphenylene sulfide | Second coupling agent | Wollastonite | Auxiliary agent |
| Example 1 | Sr ferri te | 83 par ts | KH5 50 | 0.5 par ts | Polyphen ylene sulfide I | 12 par ts | Phosp hate couplin g agent | 0.5 par ts | Wollast onite A | 3 par ts | Auxili ary agent A | 1 pa rt |
| Example 2 | Sr ferri te | 83 par ts | KH5 50 | 0.5 par ts | Polyphen ylene sulfide I | 12 par ts | Phosp hate couplin g agent | 0.5 par ts | Wollast onite B | 3 par ts | Auxili ary agent A | 1 pa rt |
| Example 3 | Sr ferri te | 83 par ts | KH5 50 | 0.5 par ts | Polyphen ylene sulfide I | 12 par ts | Phosp hate couplin g agent | 0.5 par ts | Wollast onite C | 3 par ts | Auxili ary agent A | 1 pa rt |
| Example 4 | Sr ferri te | 83 par ts | KH5 50 | 0.5 par ts | Polyphen ylene sulfide I | 12 par ts | Phosp hate couplin g agent | 0.5 par ts | Wollast onite D | 3 par ts | Auxili ary agent A | 1 pa rt |
| Example 5 | Sr ferri te | 83 par ts | KH5 50 | 0.5 par ts | Polyphen ylene sulfide I | 12 par ts | Phosp hate couplin g agent | 0.5 par ts | Wollast onite B | 3 par ts | Auxili ary agent B | 1 pa rt |
| Example 6 | Sr ferri te | 83 par ts | KH5 50 | 0.5 par ts | Polyphen ylene sulfide I | 12 par ts | Phosp hate couplin g agent | 0.5 par ts | Wollast onite B | 3 par ts | Auxili ary agent C | 1 pa rt |
| Example 7 | Sr ferri te | 83 par ts | KH5 50 | 0.5 par ts | Polyphen ylene sulfide II | 12 par ts | Phosp hate couplin g agent | 0.5 par ts | Wollast onite C | 3 par ts | Auxili ary agent B | 1 pa rt |
| Example 8 | Sr ferri te | 85 par ts | KH5 50 | 0.5 par ts | Polyphen ylene sulfide II | 12 par ts | Phosp hate couplin g agent | 0.5 par ts | Wollast onite C | 1 par t | Auxili ary agent B | 1 pa rt |
| Example 9 | Sr ferri te | 81 par ts | KH5 50 | 0.5 par ts | Polyphen ylene sulfide II | 12 par ts | Phosp hate couplin g agent | 0.5 par ts | Wollast onite C | 5 par ts | Auxili ary agent B | 1 pa rt |
| Example 10 | Sr ferri te | 81 par ts | KH5 50 | 0.5 par ts | Polyphen ylene sulfide II | 14 par ts | Phosp hate couplin g agent | 0.5 par ts | Wollast onite C | 3 par ts | Auxili ary agent B | 1 pa rt |
| Example 11 | Sr ferri te | 85 par ts | KH5 50 | 0.5 par ts | Polyphen ylene sulfide II | 10 par ts | Phosp hate couplin g agent | 0.5 par ts | Wollast onite C | 3 par ts | Auxili ary agent B | 1 pa rt |
| Example 12 | Sr ferri te | 83 par ts | KH5 50 | 0.5 par ts | Polyphen ylene sulfide III | 12 par ts | Phosp hate couplin g agent | 0.5 par ts | Wollast onite C | 3 par ts | Auxili ary agent B | 1 pa rt |
| Example 13 | Ba ferri te | 80 par ts | KH5 60 | 1 par t | Polyphen ylene sulfide I | 10 par ts | Phosp hate couplin g agent | 1 par t | Wollast onite C | 2 par ts | Auxili ary agent D | 0. 1 pa rt |
| Example 14 | Sr ferri te | 83 par ts | KH5 50 | 0.5 par ts | Polyphen ylene sulfide I | 15 par ts | Phosp hate couplin g agent | 0.5 par ts | Wollast onite C | 3 par ts | Auxili ary agent A | 1 pa rt |
| Compar ative Example 1 | Sr ferri te | 87 par ts | KH5 50 | 1 par t | Polyphen ylene sulfide I | 12 par ts | / | / | / | / | / | / |
| Compar ative Example 2 | Sr ferri te | 87 par ts | KH5 50 | 1 par t | Polyphen ylene sulfide II | 12 par ts | / | / | / | / | / | / |
| Compar ative Example 3 | Sr ferri te | 87 par ts | KH5 50 | 1 par t | Polyphen ylene sulfide III | 12 par ts | / | / | / | / | / | / |
| Compar ative Example 4 | Sr ferri te | 87 par ts | KH5 50 | 1 par t | Polyphen ylene sulfide I | 12 par ts | / | / | / | / | / | / |
| Compar ative Example 5 | Sr ferri te | 83 par ts | KH5 50 | 0.5 par ts | Polyphen ylene sulfide I | 12 par ts | Phosp hate couplin g agent | 0.5 par ts | / | / | Auxili ary agent A | 1 pa rt |
| Compar ative Example 6 | Sr ferri te | 83 par ts | KH5 50 | 0.5 par ts | Polyphen ylene sulfide I | 12 par ts | Phosp hate couplin g agent | 0.5 par ts | Wollast onite A | 7 par ts | Auxili ary agent A | 1 pa rt |

**Table 2**

| | Tensile strength MPa | Bending strength MPa | Fluidity g/10min | Change rate of the inner hole size % |
|---|---|---|---|---|
| Example 1 | 67 | 89 | 153 | 1.1 |
| Example 2 | 83 | 113 | 120 | 0.4 |
| Example 3 | 82 | 115 | 98 | 0.6 |
| Example 4 | 85 | 110 | 50 | 1.4 |
| Example 5 | 83 | 115 | 156 | 0.5 |
| Example 6 | 79 | 115 | 128 | 0.7 |
| Example 7 | 80 | 108 | 128 | 0.7 |
| Example 8 | 71 | 99 | 145 | 1.2 |
| Example 9 | 70 | 102 | 128 | 1.1 |
| Example 10 | 62 | 90 | 20 | 2 |
| Example 11 | 80 | 118 | 0 | 1.2 |
| Example 12 | 57 | 89 | 180 | 1.7 |
| Example 13 | 61 | 82 | 147 | 1.3 |
| Example 14 | 60 | 80 | 142 | 1.6 |
| Comparative Example 1 | 78 | 111 | 25 | 2.0 |
| Comparative Example 2 | 71 | 105 | 90 | 2.1 |
| Comparative Example 3 | 57 | 96 | 170 | 2.2 |
| Comparative Example 4 | / | / | / | 0.9 |
| Comparative Example 5 | 48 | 80 | 123 | 2.5 |
| Comparative Example 6 | / | / | / | / |

The higher proportion of the binder PPS in Example 10 resulted in poorer wear resistance compared with Example 3.

In Example 11, due to the low proportion of binder, the fluidity was 0.

The binder used in Example 12 had low viscosity, which weakened the strength and wear resistance of the magnet.

Because the proportion of wollastonite in comparative example 6 was too high, the wollastonite cannot be coated by the binder repeatedly, so that slight falling off of powder occured.

From the above description, it can be seen that the above examples of the disclosure achieve the following technical effects: the injection molding magnetic material of the application can effectively improve the interface bonding effect between components by filling wollastonite on the surface of the injection molding magnetic material. At the same time, the use of an auxiliary agent and wollastonite can ensure the formability and wear resistance of the injection molding magnetic material. The first coupling agent can improve the compatibility between the magnetic powder and the binder, and the second coupling agent can improve the adhesion of the wollastonite, and improve the bonding force between the wollastonite and the magnetic powder, thereby improving the wear resistance of the injection molding magnetic material. In the above proportioning range, each component can interact synergistically to improve the interface bonding effect therebetween, so as to further improve the wear resistance of the injection molding magnetic material.

The above descriptions are only the preferred examples of the present disclosure, and is not intended to limit thereto. For those skilled in the art, various modifications and changes can be made to the present disclosure. Any modifications, equivalent substitutions, improvements, and the like made within the spirit and principle of the present disclosure shall be included into the protection scope of the present disclosure.

## Claims

1. An injection molding magnetic material, wherein in terms of part by weight, the injection molding magnetic material comprises:
| | |
|---|---|
| a magnetic powder | 80 to 85 parts; |
| a polymer binder | 10 to 15 parts; |
| a first coupling agent | 0.5 to 1 part; |
| a second coupling agent | 0.5 to 1 part; |
| wollastonite | 2 to 5 parts; and |
| an auxiliary agent | 0.1 to 1 part. |

2. The injection molding magnetic material according to claim 1, wherein the magnetic powder is ferrite magnetic powder and/or rare earth injection molding magnetic powder, preferably the ferrite magnetic powder is Sr ferrite and/or Ba ferrite magnetic powder, more preferably the ferrite magnetic powder is Sr ferrite, and preferably the magnetic powder has an average particle size D₅₀ of 1.8 to 2.0 µm.

3. The injection molding magnetic material according to claim 1, wherein the polymer binder is polyphenylene sulfide; further preferably the polyphenylene sulfide has a melt flow rate of 500 to 3000g/10min.

4. The injection molding magnetic material according to any one of claims 1 to 3, wherein the auxiliary agent is a composition of a fluorine additive and a slipping agent, preferably the fluorine additive is polyphthalamide, and preferably the slipping agent is erucamide;
further preferably, the parts by weight ratio of the fluorine additive and the slipping agent is 2:3 to 3:2.

5. The injection molding magnetic material according to any one of claims 1 to 4, wherin the wollastonite is superfine wollastonite, more preferably the wollastonite has a particle size of 800 to 1200 mesh.

6. The injection molding magnetic material according to any one of claims 1 to 5, wherin the first coupling agent is a silane coupling agent, preferably the silane coupling agent is KH550 and/or KH560; and preferably, the second coupling agent is a phosphate coupling agent.

7. The injection molding magnetic material according to claim 1, wherin in terms of part by weight, the injection molding magnetic material comprises:
| | |
|---|---|
| a magnetic powder | 83 to 85 parts; |
| a polymer binder | 12 to 15 parts; |
| a first coupling agent | 0.5 to 1 part; |
| a second coupling agent | 0.5 to 1 part; |
| wollastonite | 2 to 5 parts; and |
| an auxiliary agent | 0.1 to 1 part; |
more preferably, in terms of part by weight, the injection molding magnetic material comprises:
| | |
|---|---|
| a magnetic powder | 83 parts; |
| a polymer binder | 12 parts; |
| a first coupling agent | 0.5 parts; |
| a second coupling agent | 0.5 parts; |
| wollastonite | 3 parts; and |
| an auxiliary agent | 1 part. |

8. A preparation method of the injection molding magnetic material according to any one of claims 1 to 7, wherin the preparation method comprises:
step S1, subjecting the magnetic powder, the first coupling agent and the polymer binder to a first mixing, so as to obtain a first mixture;
step S2, subjecting the first mixture to a first extrusion granulation to obtain an injection molding magnetic masterbatch;
step S3, subjecting the injection molding magnetic masterbatch, the second coupling agent, wollastonite, the auxiliary agent to a second mixing, so as to obtain a second mixture;
step S4, subjecting the second mixture to a second extrusion granulation to obtain the injection molding magnetic material.

9. The preparation method according to claim 8, wherin the temperatures of the first mixing and the second mixing are independently 80 to 120° C, and the times of the first mixing and the second mixing are independently 30 to 60 min.

10. The preparation method according to claim 8 or 9, wherin the first extrusion granulation and the second extrusion granulation both use a twin-screw extruder, and preferably the temperatures of the first extrusion granulation and the second extrusion granulation are independently 290 to 310° C.

11. The preparation method according to any one of claims 8 to 10, wherin in the step S3, the first coupling agent and the second coupling agent are mixed with an organic solvent before use, preferably the organic solvent is isopropanol, and preferably the second coupling agent is mixed with the organic solvent in a weight ratio of 1:5 to 1:10.
